# EUROPEAN PATENT APPLICATION

(11) **EP 4 491 355 A1**
(43) Date of publication of application: **15.01.2025**
(21) Application number: 23766307.5
(22) Date of filing: 16.01.2023
(51) Int. Cl.: B25J 15/08

(54) **ROBOT DEVICE AND SENSOR DEVICE**

(30) Priority: 07.03.2022 JP 2022034842
(71) Applicant: Sony Group Corporation, Tokyo 108-0075 (JP)
(72) Inventor: KOBAYASHI, Ken, Tokyo 108-0075 (JP); EBISUI, Akira, Tokyo 108-0075 (JP); HASEGAWA, Hayato, Tokyo 108-0075 (JP); SAKAKURA, Yoshiaki, Tokyo 108-0075 (JP); GOTO, Tetsuro, Tokyo 108-0075 (JP); TSUKAMOTO, Kei, Tokyo 108-0075 (JP); TOYOIZUMI, Teppei, Tokyo 108-0075 (JP)
(74) Representative: D Young & Co LLP
(86) International application number: PCT/JP2023/000953
(87) International publication number: WO 2023/171126

(57) **Abstract**

A robot apparatus according to one embodiment of the present technology includes a hand portion, a sensor portion, and a holding member. The hand portion includes a plurality of finger portions disposed to face each other in a direction of a first axis. The sensor portion includes a first pressure sensor and a deformation layer. The first pressure sensor is disposed on at least one of the plurality of finger portions and is capable of detecting a pressure distribution. The deformation layer is disposed on the first pressure sensor and is made of a viscoelastic material. The holding member is supported by the deformation layer and includes a claw portion that protrudes from a tip of the at least one of the finger portions in a direction of a second axis intersecting with the first axis and is capable of holding a workpiece.

## Description

### Technical Field

The present technology relates to a robot apparatus including a hand portion and to a sensor apparatus.

### Background Art

In recent years, automation of work using a robot has been discussed in various scenes as working population is reduced. For example, when a holding target object (hereinafter, also referred to as a workpiece) placed on a working table is picked up by a robot hand in a factory, a shop, or the like, there is a need to highly accurately detect a force acting on a region being in contact with the workpiece. For example, Patent Literature 1 discloses a robot hand having a holding surface on which a pressure sensitive sensor is installed.

### Citation List

### Patent Literature

Patent Literature 1: Japanese Patent Application Laid-open No. 2013-123773

### Disclosure of Invention

### Technical Problem

In order to perform the behavior control of a robot to a high degree, it is desirable that a direction in which a multiaxial force acts on a holding surface can be detected. However, if a plurality of elements each having a single detection axis is combined to detect a multiaxial force, the structure is enlarged. Further, if the elements are arranged so as to perform detection in a surface distribution, those elements occupy a large space.

Furthermore, since there are no nodes on a sensor end surface, a force acting on a fingertip of a robot hand cannot be detected. Therefore, there is a problem that a holding operation for a relatively thin lightweight workpiece such as a coin or a card is hard to perform. In addition, since a contact between the fingertip and the working table or workpiece cannot be detected, there is a possibility that the robot hand is damaged due to excessive stress applied to the fingertip.

In view of the circumstances as described above, it is an object of the present technology to provide a robot apparatus and a sensor apparatus that are capable of detecting stress applied to a fingertip. Solution to Problem

A robot apparatus according to one embodiment of the present technology includes a hand portion, a sensor portion, and a holding member.

The hand portion includes a plurality of finger portions disposed to face each other in a direction of a first axis.

The sensor portion includes a first pressure sensor and a deformation layer. The first pressure sensor is disposed on at least one of the plurality of finger portions and is capable of detecting a pressure distribution. The deformation layer is disposed on the first pressure sensor and is made of a viscoelastic material.

The holding member is supported by the deformation layer and includes a claw portion that protrudes from a tip of the at least one of the finger portions in a direction of a second axis intersecting with the first axis and is capable of holding a workpiece.

The robot apparatus includes the holding member including the claw portion protruding from the tip of the finger portion, and detects a pressure acting on the claw portion by the first pressure sensor via the deformation layer. This makes it possible to detect stress applied to the tip of the finger portion without disposing a sensor on the tip of the hand.

The first pressure sensor may be configured to detect an in-plane pressure distribution perpendicular to the direction of the first axis.

The holding member may further include a base that is disposed to face the first pressure sensor in the direction of the first axis with the deformation layer being sandwiched therebetween.

This makes it possible to ensure rigidity of the claw portion and also to take a large detection range of the first pressure sensor.

The plurality of sensor portions may further include a second pressure sensor that is disposed on the holding member and is capable of detecting an in-plane pressure distribution perpendicular to the direction of the first axis.

This makes it possible to detect not only the pressure distribution but also shear stress applied to the deformation layer.

The claw portion may be a plate member having a holding surface perpendicular to the direction of the first axis.

Alternatively, the claw portion may be a single or a plurality of columnar bodies extending perpendicular to the direction of the first axis.

The finger portion may have a first main surface and a second main surface each perpendicular to the direction of the first axis. The first main surface may be an inner side surface on the side on which the workpiece is held, and the second main surface may be an outer side surface opposite to the first main surface.

The first pressure sensor may be disposed on the first main surface.

Alternatively, the first pressure sensor may be disposed on the second main surface.

The holding member may include a coupling portion that couples the claw portion and the base to each other, and a shaft portion that is supported by the hand portion and rotatably supports the coupling portion about a third axis orthogonal to the first axis and the second axis.

The claw portion may include a groove that extends along a direction of the third axis and is capable of housing the workpiece.

This makes it possible to stably hold a linear or bar-like workpiece.

The robot apparatus may further include a control unit that generates a control command for controlling the hand portion on the basis of an output of the sensor portion.

A sensor apparatus according to one embodiment of the present technology includes a pressure sensor, a deformation layer, and a holding member.

The pressure sensor is disposed on at least one of a plurality of finger portions capable of holding a workpiece in a direction of a first axis and is configured to be capable of detecting an in-plane pressure distribution perpendicular to the direction of the first axis.

The deformation layer is disposed on the pressure sensor and is made of a viscoelastic material.

The holding member is supported by the deformation layer and includes a claw portion that protrudes from a tip of the at least one of the finger portions in a direction of a second axis orthogonal to the first axis and holds the workpiece.

### Brief Description of Drawings

[Fig. 1] Fig. 1 is a perspective view of a main part showing a robot apparatus according to a first embodiment of the present technology.
[Fig. 2] Fig. 2 is a front view of a hand portion, showing a configuration of a sensor apparatus of the robot apparatus.
[Fig. 3] Fig. 3 is an enlarged view showing details of the sensor apparatus.
[Fig. 4] Fig. 4 is a schematic plan view of a sensor electrode layer of the sensor apparatus.
[Fig. 5] Fig. 5 is an enlarged view of a main part of Fig. 4.
[Fig. 6] Fig. 6 is a front view for describing an action of the robot apparatus.
[Fig. 7] Fig. 7 is a front view for describing an action of a robot apparatus according to a comparative example.
[Fig. 8] Fig. 8 is a block diagram showing a configuration of a control unit of the robot apparatus.
[Fig. 9] Fig. 9 is a block diagram showing an example of a control system of the robot apparatus.
[Fig. 10] Fig. 10 is a front view of a main part, showing a configuration of a hand portion according to a second embodiment of the present technology.
[Fig. 11] Fig. 11 is a front view of a main part, showing a configuration of a hand portion according to a third embodiment of the present technology.
[Fig. 12] Fig. 12 is an enlarged view of a claw portion of the hand portion.
[Fig. 13] Fig. 13 is a side view of the claw portion.
[Fig. 14] Fig. 14 is a schematic diagram showing an example of a change over time of a holding force detected by a pressure sensor of the robot apparatus.
[Fig. 15] Fig. 15 is a schematic diagram showing an example of a change over time of tension with respect to a workpiece that is detected by the pressure sensor of the robot apparatus.
[Fig. 16] Fig. 16 is a diagram showing another configuration example of the hand portion.
[Fig. 17] Fig. 17 is a diagram showing another configuration example of the hand portion.

### Mode(s) for Carrying Out the Invention

Hereinafter, embodiments according to the present technology will be described with reference to the drawings.

### <First Embodiment>

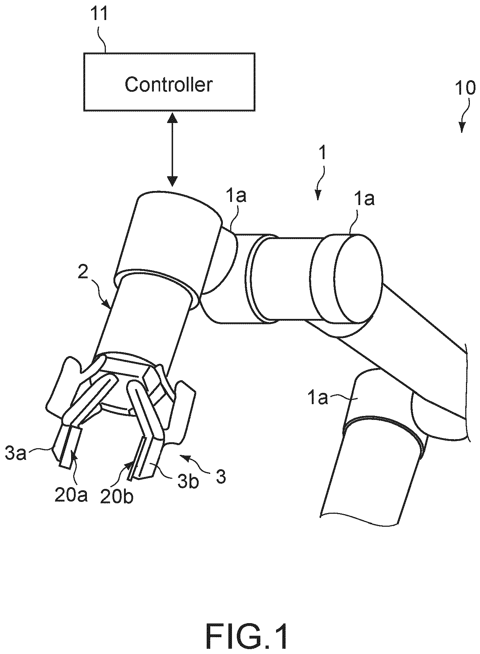

Fig. 1 is a perspective view of a main part showing a robot apparatus 10 according to a first embodiment of the present technology. In this embodiment, the robot apparatus 10 constitutes a robot hand. Hereinafter, a configuration of the robot apparatus 10 will be schematically described.

### [Robot Apparatus]

As shown in Fig. 1, the robot apparatus 10 includes an arm portion 1, a wrist portion 2, and a hand portion 3.

The arm portion 1 includes a plurality of joint portions 1a, and the hand portion 3 can be moved to any position by the driving of the joint portions 1a. The wrist portion 2 is rotatably connected to the arm portion 1, and the hand portion 3 can be rotated by the rotation of the wrist portion 2.

The hand portion 3 includes a plurality of finger portions capable of holding a holding target object (workpiece). In this embodiment, the hand portion 3 includes two finger portions 3a and 3b that face each other, and a workpiece can be held between the two finger portions 3a and 3b by the two finger portions 3a and 3b being driven. Note that the number of finger portions can be changed appropriately to three, four or more, or the like.

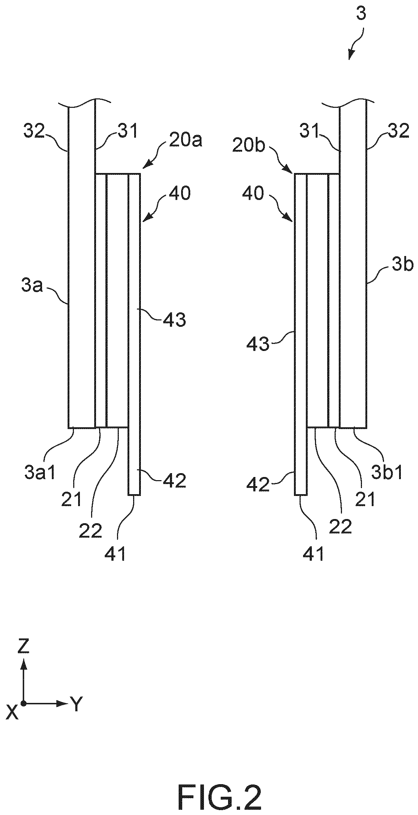

Sensor apparatuses 20a and 20b are provided to the surfaces facing each other of the two finger portions 3a and 3b. The sensor apparatuses 20a and 20b each have a pressure detection surface and are each configured to be capable of detecting a pressure component that is applied to the pressure detection surface in a perpendicular direction and an in-plane distribution of the pressure component. Further, the sensor apparatuses 20a and 20b may also be a three-axis sensor capable of detecting not only a pressure distribution but also a shear force parallel to the pressure detection surface and an in-plane distribution thereof. Note that the configuration of the sensor apparatuses 20a and 20b will be described later with reference to Fig. 2 and the like.

The robot apparatus 10 is driven by the control of a controller 11. The controller 11 includes a control section, a storage section, and the like. The control section is, for example, a central processing unit (CPU) and controls driving of each portion of the robot apparatus 10 on the basis of a program stored in the storage section. The controller 11 may be a dedicated device in the robot apparatus 10 or may be a general-purpose apparatus. The controller 11 may be, for example, a personal computer (PC) connected to the robot apparatus 10 through a wired or wireless connection, a server apparatus on a network, or the like. The controller 11 may be configured as a part of the robot apparatus 10.

### [Sensor Apparatus]

Subsequently, details of the sensor apparatuses 20a and 20b will be described. The sensor apparatuses 20a and 20b each have the same configuration. The sensor apparatuses 20a and 20b are each formed of a sensor sheet capable of detecting a pressure distribution of the pressure detection surface as described above.

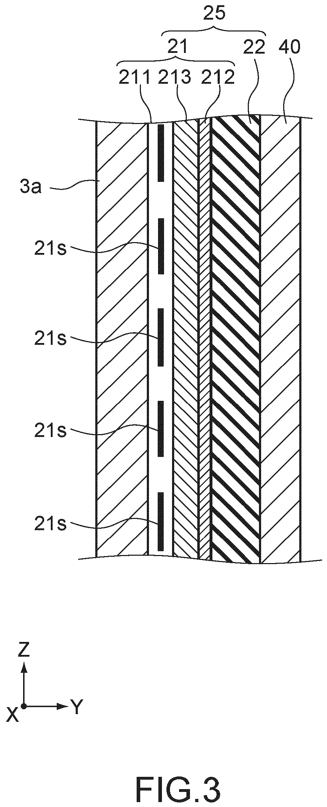

Fig. 2 is a front view of the hand portion 3, showing a configuration of the sensor apparatuses 20a and 20ab. Fig. 3 is an enlarged view showing the details of one sensor apparatus 20a. In each figure, the X-axis, the Y-axis, and the Z-axis are three axes orthogonal to each other, and the X-axis and the Y-axis represent the horizontal direction, and the Z-axis represents the vertical direction.

The sensor apparatuses 20a and 20b are respectively disposed on one side surface portions of the finger portions 3a and 3b. As shown in Fig. 2, the pair of finger portions 3a and 3b facing each other in the Y-axis (first axis) direction each have a first main surface 31 and a second main surface 32 that are perpendicular to the Y-axis direction. Of those, the first main surfaces 31 or the sensor apparatuses 20a and 20b are inner side surfaces (on the side on which a workpiece is held) facing each other of the finger portions 3a and 3b, and the second main surfaces 32 are outer side surfaces of the finger portions 3a and 3b, which are opposite to the first main surfaces. In this embodiment, the sensor apparatuses 20a and 20b are disposed on the first main surfaces 31 of the finger portions 3a and 3b. Note that, as will be described later, the sensor apparatuses 20a and 20b may be disposed on the second main surfaces 32.

The sensor apparatuses 20a and 20b each include a pressure sensor 21 (first pressure sensor), a deformation layer 22, and a holding member 40. The pressure sensor 21 and the deformation layer 22 correspond to a sensor portion 25 of the robot apparatus 10 (see Fig. 3).

### (Pressure Sensor)

The pressure sensor 21 is a pressure distribution sensor that is capable of detecting an in-plane (XZ-plane) pressure distribution perpendicular to the Y-axis direction. The pressure sensor 21 is a sensor sheet parallel to the XZ-plane. The pressure sensor 21 has a shape of a rectangular flat plate as a whole in plan view. Note that the shape of the pressure sensor 20 in plan view is not particularly limited and only needs to be appropriately set in accordance with the shape of a location where each of the sensor apparatuses 20a and 20b is disposed. For example, the shape of the pressure sensor 21 in plan view may be a polygon other than a rectangle, a circle, or an ellipse.

As shown in Fig. 3, the pressure sensor 21 includes a sensor electrode layer 211, a reference electrode layer 212, and an elastic layer 213. Those layers are bonded via adhesive layers not shown.

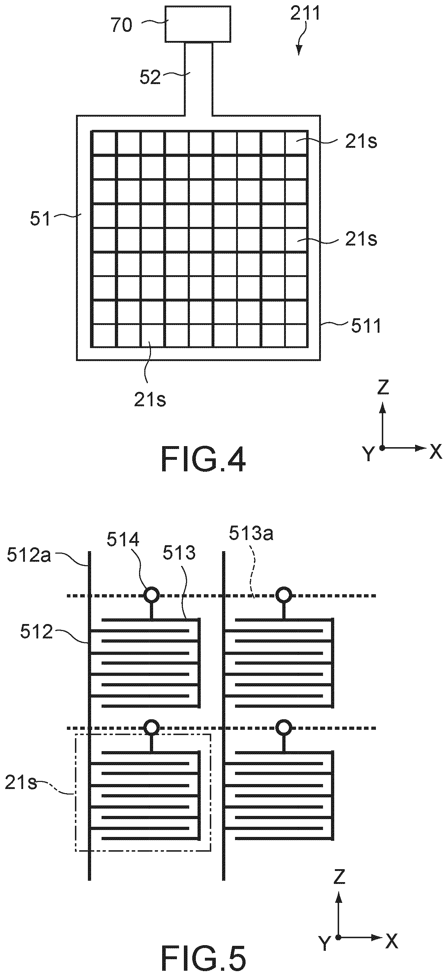

The sensor electrode layer 211 includes a flexible printed circuit board or the like. As shown in Fig. 4, the sensor electrode layer 211 includes a main body 51 that is rectangular in plan view, and an extended portion 52 that is extended outward from the main body 51.

The main body 51 of the sensor electrode layer 211 includes a base material 511 having flexibility, and a plurality of sensing portions 21s provided on a front surface of the base material 511 or provided inside the base material 511. For example, a polymer resin such as polyethylene terephthalate, polyimide, polycarbonate, or an acrylic resin is used as the material of the base material 511. The sensing portions 21s are regularly arranged in a matrix at predetermined intervals in directions of length and width (length: the y-axis direction, width: the x-axis direction). In the example shown in Fig. 4, the number of sensing portions 21s is 81 in total with nine × nine (length × width). Note that the number of sensing portions 21s can be appropriately changed.

The sensing portion 21s includes a capacitive element (detection element) capable of detecting a change in distance from the reference electrode layer 212 as a change in capacitance. For example, as shown in Fig. 5, the sensing portion 21s includes a comb-teeth-shaped pulse electrode 512 and a comb-teeth-shaped sense electrode 513. The comb-teeth-shaped pulse electrode 512 and the comb-teeth-shaped sense electrode 513 are disposed such that their comb teeth face each other. Each sensing portion 21s is formed by a region (node area) in which the comb teeth of one of the comb-teeth-shaped pulse electrode 512 and the comb-teeth-shaped sense electrode 513 are disposed to enter spaces formed between the comb teeth of the other one of the comb-teeth-shaped pulse electrode 512 and the comb-teeth-shaped sense electrode 513. Each pulse electrode 512 is connected to a wiring portion 512a extending in the Z-axis direction, and each sense electrode 513 is connected to a wiring portion 513a extending in the X-axis direction. The wiring portions 512a are arranged in the X-axis direction on the front surface of the base material 511, and the wiring portions 513a are arranged in the Z-axis direction on the back surface of the base material 511. Each sense electrode 513 is electrically connected to the wiring portion 513a via a through-hole 514 provided in the base material 511. The sensor electrode layer 211 may include a ground line. The ground line is provided to, for example, an outer peripheral portion of the sensor electrode layer 211 or a portion in which the wiring portions 512a and 513a are arranged side by side.

Note that the structure of the sensing portion 21s is not limited to the example described above, and any structure may be used. For example, the sensor electrode layer 211 may be formed of a laminate of a first electrode sheet having a lattice-shaped first electrode pattern extending in the X-axis direction and a second electrode sheet having a lattice-shaped second electrode pattern extending in the Z-axis direction. In this case, the sensing portion 21s is formed at an intersection of the first electrode pattern and the second electrode pattern.

The extended portion 52 of the sensor electrode layer 211 is equipped with a control unit 70 that calculates a force in the in-plane direction on the basis of information of the pressure detected by the pressure sensor 21. The control unit 70 is typically a computer including a central processing unit (CPU) and includes an integrated circuit such as an IC chip. The control unit 70 is mounted on the sensor electrode layer 211 (extended portion 52) and is configured to drive the pressure sensor 21 and to input output signals from the pressure sensor 21. Note that the control unit 70 is not limited to the example in which the control unit 70 is mounted on the sensor electrode layer 211.

The reference electrode layer 212 is connected to a reference potential. In this embodiment, the reference electrode layer 212 is a so-called grounding electrode and is connected to a ground potential. The reference electrode layer 212 has flexibility and has a thickness of, for example, approximately 0.05 um to 0.5 um. For example, an inorganic conductive material, an organic conductive material, or a conductive material including both the inorganic conductive material and the organic conductive material is used as the material of the reference electrode layer 212.

Examples of the inorganic conductive material include metals such as aluminum, copper, and silver, alloys such as stainless steel, and metal oxides such as zinc oxide and indium oxide. Further, examples of the organic conductive material include carbon materials such as carbon black and carbon fibers, and conductive polymers such as substituted or unsubstituted polyaniline and polypyrrole. The reference electrode layer 212 may be formed of a thin metal plate made of stainless steel, aluminum, or the like, a conductive fiber, a conductive nonwoven fabric, or the like. The reference electrode layer 212 may be formed on a plastic film by, for example, a method such as vapor deposition, sputtering, bonding, or coating.

The elastic layer 213 is disposed between the sensor electrode layer 211 and the reference electrode layer 212. The elastic layer 213 has a thickness of, for example, approximately 100 um to 1000 um. The elastic layer 213 is formed of an elastic material that is elastically deformable in response to an external force. When an external force is applied to the pressure sensor 21 in the perpendicular direction (the Y-axis direction), the elastic layer 213 elastically deforms in response to the external force, and the reference electrode layer 212 approaches the sensor electrode layer 211. At that time, a capacitance between the pulse electrode 512 and the sense electrode 513 changes in the sensing portion 21s, and thus the sensing portion 21s is capable of detecting such a change in capacitance as a pressure value.

The thickness of the elastic layer 213 is set to be, for example, larger than 100 um and equal to or less than 1000 um, and the basis weight of the elastic layer 213 is set to be, for example, 50 mg/cm² or less. Setting the thickness and the basis weight of the elastic layer 213 within the above ranges makes it possible to improve the detection sensitivity of the pressure sensor 21 in the perpendicular direction.

A lower limit of the thickness of the elastic layer 213 is not particularly limited as along as the lower limit is larger than 100 um, and the lower limit may be, for example, 150 um or more, 200 um or more, 250 um or more, or 300 um or more. Further, an upper limit of the thickness of the elastic layer 213 is not particularly limited as long as the upper limit is 1000 um or less, and the upper limit may be, for example, 950 um or more, 900 um or less, 850 um or less, or 800 or less.

Examples of the elastic material that forms the elastic layer 213 include urethane foam. Other than the urethane foam, for example, a rubber material made of acrylic or silicon, and a viscoelastic material such as an adhesive are also applicable. The elastic layer 213 is not limited to the film structure and may have a patterning structure having a predetermined shape. For example, in order to facilitate the deformation in the Y-axis direction, the elastic layer 213 may have, for example, a patterning structure including a column structure. Various structures such as a matrix structure, a stripe structure, a mesh structure, a radial structure, a geometric structure, and a spiral structure may be adopted as the patterning structure.

### (Deformation Layer)

The deformation layer 22 is disposed between the pressure sensor 21 and the holding member 40 via adhesive layers (not shown). The deformation layer 22 is made of a viscoelastic material that is deformed by a load applied to the pressure sensor 21 via the holding member 40.

Examples of the viscoelastic material that forms the deformation layer 22 include a silicon gel, a urethane gel, synthetic rubber, and foam. The deformation layer 22 is favorably made of a material harder than the elastic layer 213 of the pressure sensor 21. This makes it possible to properly input a holding force applied to the holding member 40 to the pressure sensor 21. A thickness of the deformation layer 22 is not particularly limited, and is, for example, 200 um or more and 5000 um or less. A planar shape of the deformation layer 22 is not particularly limited and is typically rectangular or circular.

### (Holding Member)

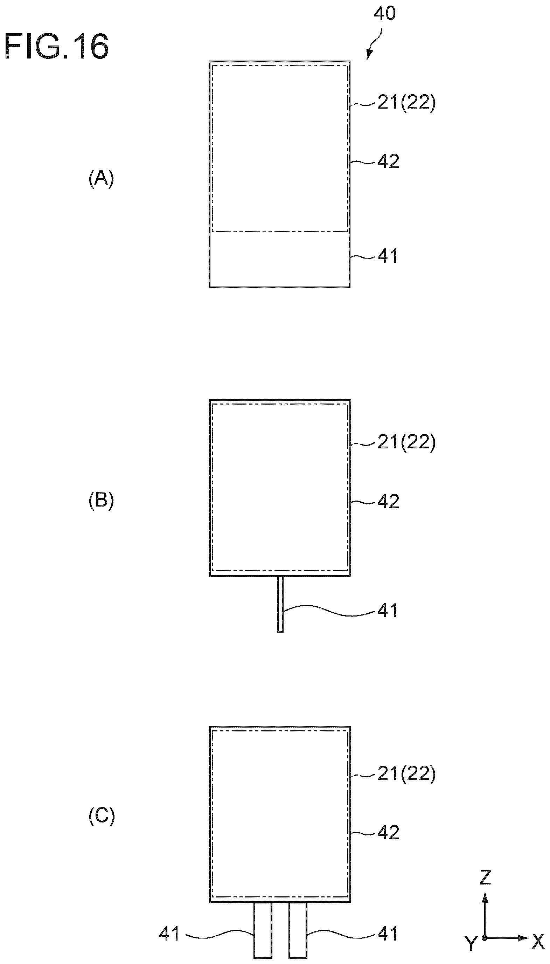

The holding member 40 is supported by the deformation layer 22 and includes a claw portion 41 protruding from each of tips 3a1 and 3b1 of the finger portions 3a and 3b in the Z-axis (second axis) direction. The surfaces facing each other of the claw portions 41 of the respective holding members 40 form holding surfaces 42 for holding a workpiece. The holding member 40 is made of, for example, a plastic material, a ceramics material, or a glass material such as reinforced glass, which has higher rigidity than that of the deformation layer 22, or a rubber material or a metal material, which has a relatively high hardness. For example, the holding member 40 is rectangular in plan view and is a plate member having the same width as a base 43 (see (A) Fig. 16), but the holding member 40 is not limited thereto and may be formed in various shapes as will be described later.

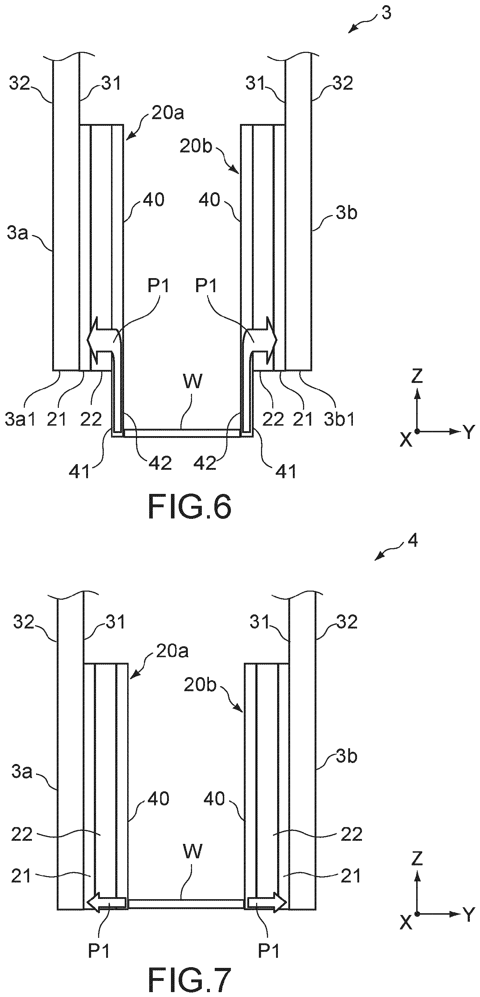

The holding member 40 is attached to the deformation layer 22 such that the claw portion 41 thereof protrudes from each of the tips 3a1 and 3b1 of the finger portions 3a and 3b in the Z-axis direction (downwardly in Fig. 2). In other words, as shown in Fig. 6, the holding member 40 functions as the tip of the claw for holding a workpiece W.

The holding member 40 includes the base 43 that is disposed to face the pressure sensor 21 in the Y-axis direction with the deformation layer 22 interposed therebetween. The base 43 is formed to have such a size that the entire surface of the pressure sensor 21 is covered. Accordingly, causing the base 42 to function as a protective layer for protecting the pressure sensor 21 and the deformation layer 22 makes it possible to enhance the durability of the pressure sensor 21 and the deformation layer 22. Note that a protective layer for protecting the peripheral surfaces of the pressure sensor 21 and the deformation layer 22 may be separately provided as necessary.

The claw portion 41 of the holding member 40 is a region extending from the base 41 in the Z-axis direction. In other words, the region protruding from each of the tips 3a1 and 3b1 of the finger portions 3a and 3b as viewed from the Y-axis direction forms the claw portion 41 of the holding member 40.

The length of the claw portion 41 of the holding member 40 (that is, the amount of protrusion from the tips 3a1 and 3b1 of the finger portions 3a and 3b) is not particularly limited. For example, as the length of the claw portion 41 becomes larger, a reaction force (moment) applied from the holding member 40 to the pressure sensor 21 when the workpiece W is held becomes larger, so that the detection sensitivity of a holding force P1 by the pressure sensor 21 can be enhanced. On the other hand, there is a possibility that a stable handling operation for the workpiece W is impaired due to an increase in the amount of deformation of the claw portion 41 or the amount of compressive deformation of the deformation layer 21. Therefore, the amount of protrusion of the claw portion 41 is adjusted in accordance with the rigidity such as hardness of the holding member 40 or the deformation layer 21, the size or shape of the workpiece W, a weight, and the like.

### [Action of Robot Apparatus]

As described above, the robot apparatus 10 of this embodiment includes the holding member 40 protruding from each of the tips 3a1 and 3b1 of the finger portions 3a and 3b and is configured to detect a pressure acting on the claw portion 41 of the holding member 40 by the pressure sensor 21 via the deformation layer 22. This makes it possible to detect a holding force to the workpiece W without disposing a sensor on the holding surface 42 at the tip of the hand.

For example, as in the case of a hand portion 4 shown in Fig. 7, if a holding member 40 does not include the above-mentioned claw portion 41 and when a thin workpiece W is held, the holding force thereof acts on the tip side of the pressure sensor 21. However, since the tip region of the pressure sensor 21 has no nodes or a small number of nodes, if the workpiece W is thin like a card or a coin, there is a problem that the holding force cannot be detected or the detection accuracy is remarkably reduced.

Further, the hand portion 4 shown in Fig. 7 fails to detect a contact between each of the tips 3a1 and 3b1 of the finger portions 3a and 3b and a working table or the workpiece W, and thus there is a possibility that the robot hand is damaged by excessive stress applied to the tips 3a1 and 3b1.

On the other hand, since the hand portion 3 in this embodiment includes the claw portions 41 of the holding members 40, the claw portions 41 protruding downwardly from the tips 3a1 and 3b1 of the finger portions 3a and 3b, the holding forces P1 applied to the holding surfaces 42 of those claw portions 41 act not only on the tip regions of the pressure sensors 21 but also over the regions adjacent to the tip regions. In other words, the claw portions 41 are inclined about the X-axis in Fig. 6 by the reaction forces applied to the claw portions 41, and thus compressive forces applied to the deformation layers 22 act on a wider range as compared with the case where the claw portions 41 are not provided. Accordingly, the holding force P1 acts not only on the tip region of the pressure sensor 21 but also on the region in the vicinity thereof, so that the pressure sensor 21 can detect the holding force P1 on the basis of a pressure value in the vicinity of the tip region and its pressure distribution. Thus, even if the workpiece W is thin like a card or a coin, a holding force can be detected highly accurately.

In addition, according to this embodiment, the stress acting on the claw portion 41 in the Z-axis direction can also be detected. For example, even when the claw portion 41 abuts on the workpiece W or the working table on which the workpiece W is placed, the movement of the claw portion 41 in the Z-axis direction or the inclination thereof about the X-axis can be detected by the pressure sensor 21. This makes it possible to, for example, suitably control the holding position (height) of the finger portions 3a and 3b relative to the workpiece W while monitoring the stress acting on the claw portion 41. As described above, according to the robot apparatus 10 of this embodiment, the stress applied to the fingertip can be detected without disposing a sensor on the fingertip.

### [Control Unit]

The control unit 70 includes a control section, a storage section, and the like. The control section is, for example, a central processing unit (CPU), and executes a program stored in the storage section on the basis of a control command from the controller 11 to control the driving of each portion in the hand portion 3. Typically, the control unit 70 acquires information of the pressures detected by the sensor apparatuses 20a and 20b, and controls the driving of the hand portion 3 so as to stably hold a target object with a suitable holding force.

The storage section includes a nonvolatile memory in which various programs and data necessary for processing of the control section are stored, and a volatile memory used as a work area of the control section. Various programs may be read from a portable recording medium such as a semiconductor memory, or may be downloaded from a server apparatus on a network.

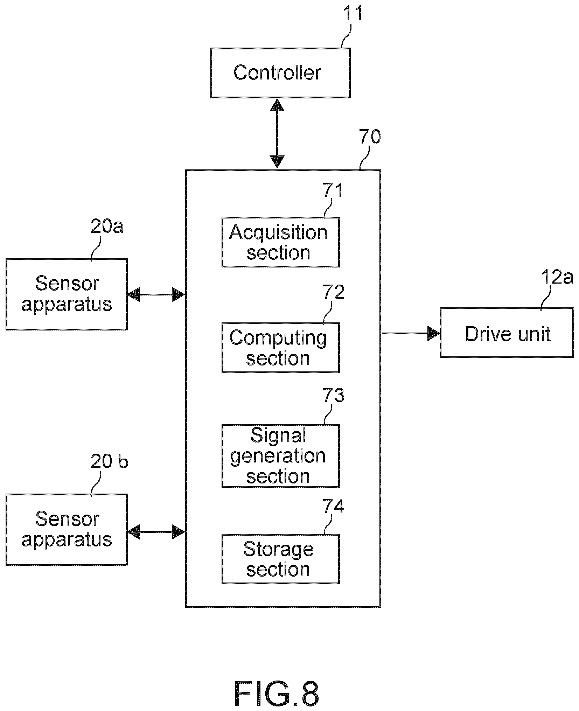

Fig. 8 is a block diagram showing a configuration of the control unit 70.

The control unit 70 is electrically connected to the sensor apparatuses 20a and 20b and is configured to calculate a pressure acting on the finger portions 3a and 3b on the basis of the outputs of the sensor apparatuses 20a and 20b. The control unit 70 is further electrically connected to the controller 11 and outputs, on the basis of a control command from the controller 11, a hold command to a drive unit 12a that drives the finger portions 3a and 3b of the hand portion 3.

The controller 11 and the control unit 70 are configured as a control apparatus that controls the operation of the hand portion 3. In this embodiment, a hold command supplied to the drive unit 12a that drives the finger portions 3a and 3b is generated in the control unit 70, but instead of this, a hold command may be generated by the controller 11 that controls the whole operation of the robot apparatus 10. In this case, the controller 11 is configured as the control apparatus.

As shown in Fig. 8, the control unit 70 includes an acquisition section 71, a computing section 72, a signal generation section 73, and a storage section 74.

The acquisition section 71 receives a pressure detection position and a pressure value thereof that are output from each of the sensor apparatuses 20a and 20b, and a control command output from the controller 11. Pressure information including the pressure detection positions and the pressure values thereof that are output from the sensor apparatuses 20a and 20b is information regarding stress detected when the hand portion 3 (finger portions 3a and 3b) comes into contact with a workpiece or a placing surface on which the workpiece is placed, and regarding stress acting on the sensor apparatuses 20a and 20b when the hand portion 3 (finger portions 3a and 3b) is holding the workpiece.

The computing section 72 calculates the pressure detection positions in the in-plane direction and the pressure values thereof, which are detected by the sensor apparatuses 20a and 20b. The load perpendicular to the pressure detection surface is calculated from, for example, the sum of the perpendicular loads acquired by the respective sensing portions 28 of the sensor apparatuses 20a and 20b.

The signal generation section 73 generates a hold command for causing the hand portion 3 to hold a workpiece on the basis of the control command from the controller 11. The hold command includes information regarding the holding force of the hand portion 3 with respect to the workpiece. The signal generation section 73 outputs the generated hold command to the drive unit 12a of the hand portion 3.

The drive unit 12a is an actuator that causes the finger portions 3a and 3b to move between a holding position and a non-holding position. In this embodiment, the drive unit 12a is, for example, a pulse motor capable of fine feed control.

The storage section 74 is typically a semiconductor memory. The storage section 74 stores a program and various parameters for performing a processing procedure of calculating a pressure or an in-plane distribution thereof on the basis of the pressure detection position in the in-plane direction, which is detected by the pressure sensor 21.

### [Control of Robot Apparatus]

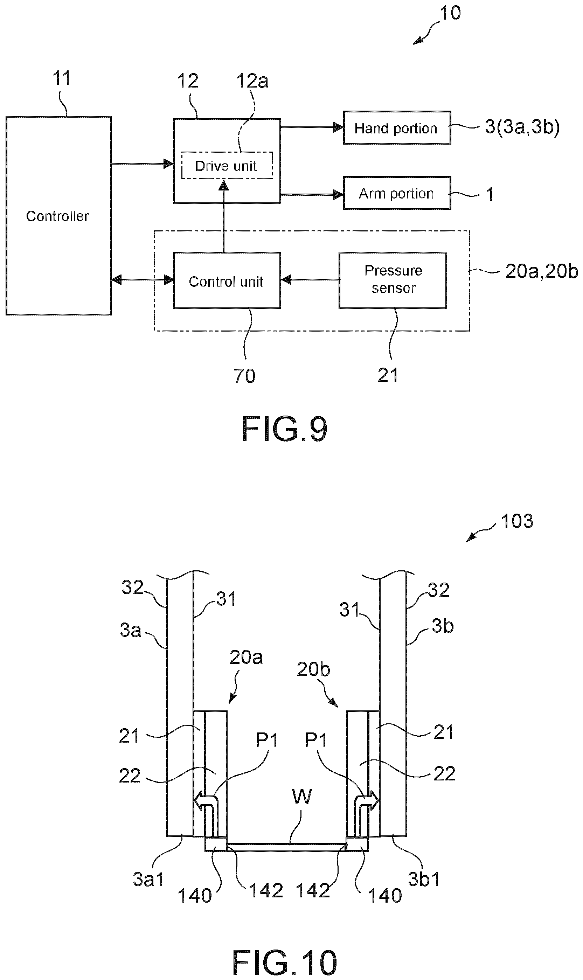

Fig. 9 is a block diagram showing an example of a control system of the robot apparatus 10. The robot apparatus 10 includes the controller 11 and a drive section 12 that drives the arm portion 1, the hand portion 3, and the like. The drive section 12 includes the drive unit 12a that drives the finger portions 3a and 3b. The controller 11 is configured to be capable of executing a control program for operating the robot apparatus 10 on the basis of input signals from various sensors.

The sensor apparatuses 20a and 20b constitute one of the various sensors described above. On the basis of a control command from the controller 11, the control unit 70 outputs a hold command for holding a workpiece to the drive unit 12a that drives the finger portions 3a and 3b of the hand portion 3. The sensor apparatuses 20a and 20b each detect the pressure acting on the claw portion 41, calculate a value of the above-mentioned pressure in the control unit 70, and input the calculated value to the controller 11. The controller 11 generates a drive signal for controlling the positions or postures of the arm portion 1 and the hand portion 3 (finger portions 3a and 3b), and outputs the drive signal to the drive section 12. The drive section 12 is typically an actuator such as an electric motor or a fluid pressure cylinder, and drives the arm portion 1, the hand portion 3, and the like on the basis of the drive signal from the controller 11.

As described above, in this embodiment, the hold control of the hand portion 3 is configured to be performed in the control unit 70. The present technology is not limited to the above, and the controller 11 may directly output a hold command to the drive unit 12a to perform the hold control of the hand portion 3. In this case, the control unit 70 performs only the functions of calculating a pressure acting on the sensor apparatuses 20a and 20b and of outputting the calculated pressure to the controller 11.

### <Second Embodiment>

Fig. 10 is a front view of a main part, showing a configuration of a hand portion 103 according to a second embodiment of the present technology. Hereinafter, the constituent elements different from those of the first embodiment will be mainly described, and the constituent elements similar to those of the first embodiment will be denoted by similar reference symbols and the description thereof will be omitted or simplified.

The hand portion 103 of this embodiment is different from that of the first embodiment in the configuration of a holding member 140. In other words, in this embodiment, the holding member 140 is disposed on an end surface of a deformation layer 22 to serve as a claw portion protruding in the Z-axis direction (downwardly in Fig. 10) from each of tips 3a1 and 3b1 of finger portions 3a and 3b. The holding member 140 is made of a plastic material, a ceramics material, or a metal material, which has higher rigidity than that of the deformation layer 22 as in the first embodiment. The shape of the holding member 140 is not particularly limited and is typically a rectangular parallelepiped shape that covers the end surface of the deformation layer 22 and that has a holding surface 142 for holding a workpiece W at one side surface portion thereof.

In the hand portion 103 thus configured in this embodiment, a holding force P1 of the workpiece W that acts on the holding surface 142 of the holding member 140 is detected as a change in pressure distribution applied to a pressure sensor 21. In addition, also when an upward load acts on the holding member 140 in Fig. 10, the load can be detected on the basis of the change in pressure distribution associated with the compressive deformation of the deformation layer 22 in the upward and downward directions. In other words, the actions and effects similar to those of the first embodiment described above can also be obtained in this embodiment.

### <Third Embodiment>

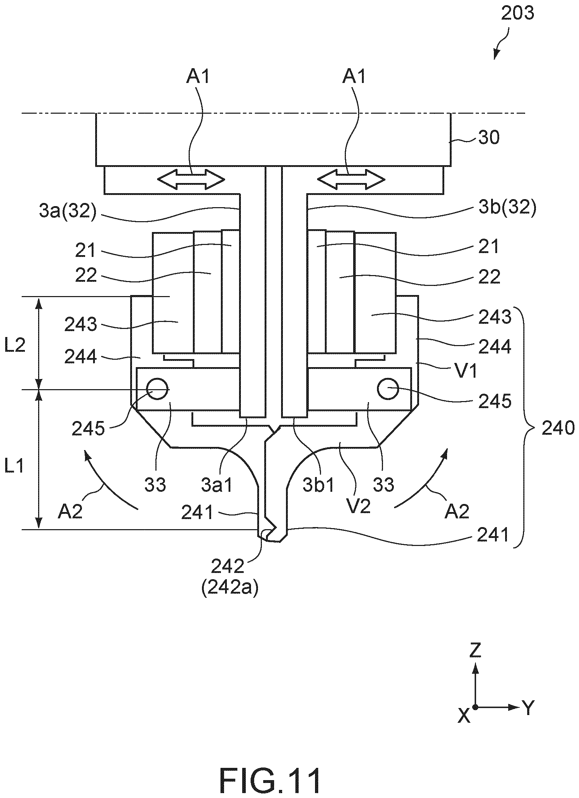

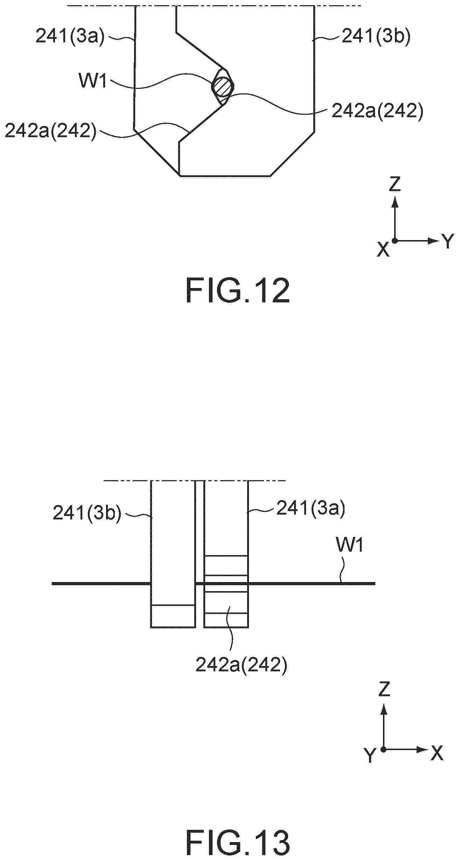

Fig. 11 is a front view of a main part, showing a configuration of a hand portion 203 according to a third embodiment of the present technology. Fig. 12 is an enlarged view of a claw portion 241 of the hand portion 203. Fig. 13 is a side view of the claw portion 241. Hereinafter, the constituent elements different from those of the first embodiment will be mainly described, and the constituent elements similar to those of the first embodiment will be denoted by similar reference symbols and the description thereof will be omitted or simplified.

The hand portion 203 of this embodiment includes, as in the first embodiment, a pressure sensor 21, a deformation layer 22, and a holding member 240. This embodiment is different from the first embodiment described above in that the pressure sensor 21 is disposed on a second main surface 32 that is an outer side surface of each of finger portions 3a and 3b. The deformation layer 22 and the holding member 240 are disposed on the pressure sensor 21 in the stated order.

Here, the finger portions 3a and 3b are movable in a direction approaching each other and a direction away from each other (arrow A1) in synchronization with a base 30 of the hand portion 203 in the Y-axis direction. In other words, the finger portions 3a and 3b move in the direction approaching each other when holding a workpiece, and moves in the direction away from each other when releasing the workpiece. Note that the present technology is not limited to the above, and only one of the finger portions 3a and 3b may be configured to be movable in the Y-axis direction.

The holding member 40 includes a claw portion 241 having a holding surface 242 for holding a workpiece, a base 243 supported by the deformation layer 22, a coupling portion 244 that couples the claw portion 241 and the base 243 to each other, and a shaft portion 245 that rotatably supports the coupling portion 244 about the X-axis.

The claw portion 241 extends along the Z-axis direction so as to protrude downwardly relative to tips 3a1 and 3b1 of the finger portions 3a and 3b. In this embodiment, a linear workpiece W1 is to be held. Thus, the claw portion 241 on the finger portion 3a side and the claw portion 241 on the finger portion 3b side are disposed to be offset from each other in the X-axis direction and are configured to partially overlap with each other in the X-axis direction in the closing state shown in the figure (when holding the workpiece W1) (see Fig. 13). Examples of the workpiece W1 include a cable, a wire, and a pin, and whether the workpiece W1 has flexibility or not is not considered.

A groove 242a capable of housing the workpiece W1 is formed in the holding surface 242 of the claw portion 241 so as to extend along the X-axis direction. The workpiece W1 is held by being sandwiched between the bottom portions of the grooves 242a of both the claw portions 241. The cross-sectional shape of the groove 242a is a substantially triangular shape, but it is not limited thereto and only needs to be a shape capable of stably holding the workpiece W1, such as an arc shape.

As in the first embodiment, the base 243 is disposed to face the pressure sensor 21 in the Y-axis direction with the deformation layer 22 interposed therebetween. The base 243 is formed in such a shape or size that substantially the whole region of the pressure sensor 21 is covered.

The coupling portion 244 is formed in a substantially L-shape and includes a first arm V1 extending from the base 243 in the longitudinal direction (the Z-axis direction) and a second arm V2 extending from the tip of the first arm V1 toward the claw portion 241 in the lateral direction (the Y-axis direction). Since each claw portion 241 is located immediately below each of the tips 3a1 and 3b1 of the finger portions 3a and 3b, the second arm V2 extends from the tip of the first arm V1 toward the inside (toward the center side of the hand portion 203).

The shaft portion 245 is supported by each of the finger portions 3a and 3b and penetrates the coupling portion 244 in the X-axis direction. The shaft portion 245 is supported by a support portion 33 provided to each of the finger portions 3a and 3b. The support portion 33 or the shaft portion 245 of the finger portion extends in the Y-axis direction from the vicinity of the tips 3a1 and 3b1 of the finger portions 3a and 3b toward the first arm V1 of the coupling portion 244, and supports the shaft portion 245 that pivotally supports the first arm V1. Note that the shaft portion 245 may be configured as a component separate from the holding member 240 or may be configured as a part of the holding member 240 (the coupling portion 244).

The hand portion 203 in the robot apparatus of this embodiment is used in, for example, a process of holding a predetermined part of the workpiece W1 retained at a predetermined posture (e.g., horizontal posture) in a space and conveying the workpiece W1 to a predetermined position. When the workpiece W1 is held, the finger portions 3a and 3b are moved to an open position, and a predetermined gap is formed between the claw portions 241 of the respective finger portions 3a and 3b. After the hand portion 203 is moved to a position where the workpiece W1 is to be located between both the claw portions 241, the finger portions 3a and 3b are moved to a holding position to sandwich the workpiece W1 by the two claw portions 241 (see Figs. 12 and 13). Note that the movement control of the hand portion 203 may be movement control using a camera not shown in the figure or may be control of movement to space coordinates set in advance.

The holding force with respect to the workpiece W1 is converted into a rotational force of the holding member 240 centering on the shaft portion 245 as indicated by the arrow A2 in Fig. 11. The rotational force of the holding member 240 is transmitted to the pressure sensor 21 via the deformation layer 22, and the amount of deformation of the deformation layer 22, a pressure value corresponding to the deformation position, and an in-plane distribution are detected.

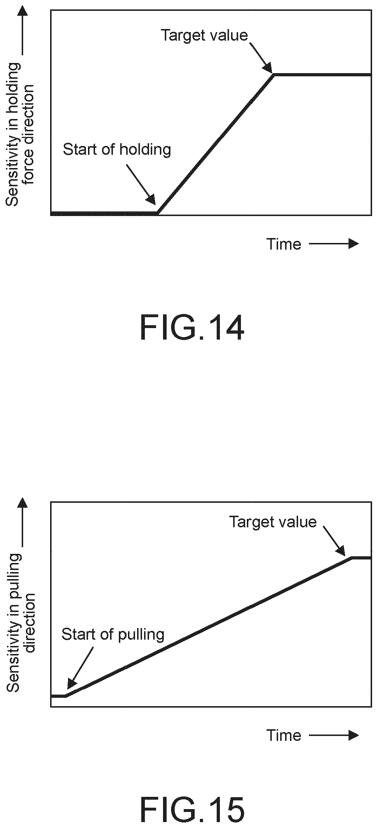

Fig. 14 is a schematic diagram showing an example of a change over time of the holding force that is detected by the pressure sensor 21. The finger portions 3a and 3b are gradually moved in a direction approaching each other (holding direction) until the pressure sensor 21 obtains a target holding force from the start of holding the workpiece W1 by the claw portion 241. This makes it possible to gradually increase a pressure detection value of the pressure sensor 21 and to monitor whether or not the holding force reaches the target value. Note that the holding force can be calculated from the sum of pressure sensitivities (the sum of changes of capacitance in the respective sensing portions 21s).

If the workpiece W1 has flexibility, a certain level of tension can be given to the workpiece W1 by the movement of the hand portion 203 in a predetermined direction. For example, in a state in which the workpiece W1 with one end thereof fixed is held with a target holding force, when the hand portion 203 is moved in a direction in which the workpiece W1 is pulled in the extending direction of the workpiece W1, the tension can be detected by the pressure sensor 21 as a change in pressure distribution corresponding to that tension. Fig. 15 is a schematic diagram showing the example thereof. As shown in Fig. 15, the pressure detection value detected by the pressure sensor 21 changes linearly from the start of pulling the workpiece W1 to the attainment of the target value. Note that the tension can be calculated from the amount of movement of the gravity position in the pressure distribution.

As described above, in the holding member 240 in this embodiment, the claw portion 241 and the base 243 are coupled to each other via the coupling portion 244, and thus adjusting the shape of the coupling portion 244 makes it possible to discretionally set the interval between the claw portions 241, which is different from the interval between the bases 243. This makes it possible to easily perform a holding operation of the workpiece W1 having a width or diameter smaller than the interval between the bases 243.

Further, according to this embodiment, the holding member 240 is configured to be rotatable about the shaft portion 245, which makes it possible to detect a holding force with respect to the workpiece W1 by the outer side surface (second main surface 32) of each of the finger portions 3a and 3b. Accordingly, the pressure sensor 21 and the deformation layer 22 can be disposed on the outer side surface of each of the finger portions 3a and 3b having a relatively high degree of freedom for installation, so that the degree of freedom in design of the hand portion 203 can be enhanced.

In addition, according to this embodiment, the holding member 240 is configured to be rotatable about the shaft portion 245, which makes it possible to amplify the holding force to be applied to the pressure sensor 21 at an amplification rate corresponding to the ratio of the distance between the base 243 and the shaft portion 245 to the distance between the shaft portion 245 and the claw portion 241 (holding surface 242). In this embodiment, as shown in Fig. 11, a vertical distance L1 between the shaft portion 245 and the holding surface 242 is set to be larger than a vertical distance L2 between the center of the base 243 and the shaft portion 245. This makes it possible to detect a minute holding force more highly accurately and to achieve a stable holding operation for a tiny or lightweight workpiece.

In addition, according to this embodiment, the two claw portions 241 are disposed at the positions offset from each other in the X-axis direction, which makes it possible to avoid a contact between the claw portions 241 in the holding operation of the workpiece W1 and to stably detect only the holding force accordingly. Further, each claw portion 241 can also hold the workpiece W1 in a positional relationship in which a shear force is applied to the workpiece W1 in the holding direction (the Y-axis direction). Such a configuration is particularly effective, for example, in a case where a card-shaped workpiece is held in its thickness direction, in addition to the case where a workpiece W1 having a relatively small (extra-fine) wire diameter is held as in this embodiment.

### <Modified Examples>

For example, in each embodiment described above, the robot apparatus in which the sensor apparatuses 20a and 20b are respectively provided to the finger portions 3a and 3b has been described as an example, but the present technology is not limited thereto. The sensor apparatus only needs to be provided to at least one of the finger portions.

Further, in the first embodiment described above, the case where the claw portion 41 of the holding member 40 has a plate shape has been described as an example as shown in (A) of Fig. 16, but the present technology is not limited thereto. For example, as shown in (B) of Fig. 16, the claw portion 41 may have a single columnar body having a columnar shape, a prismatic shape, or the like. Further, as shown in (C) of Fig. 16, the claw portion 41 may include a plurality of (two in the example shown in the figure) columnar bodies. In such a manner, the claw portion 41 can be set in any shape in accordance with the form of the workpiece.

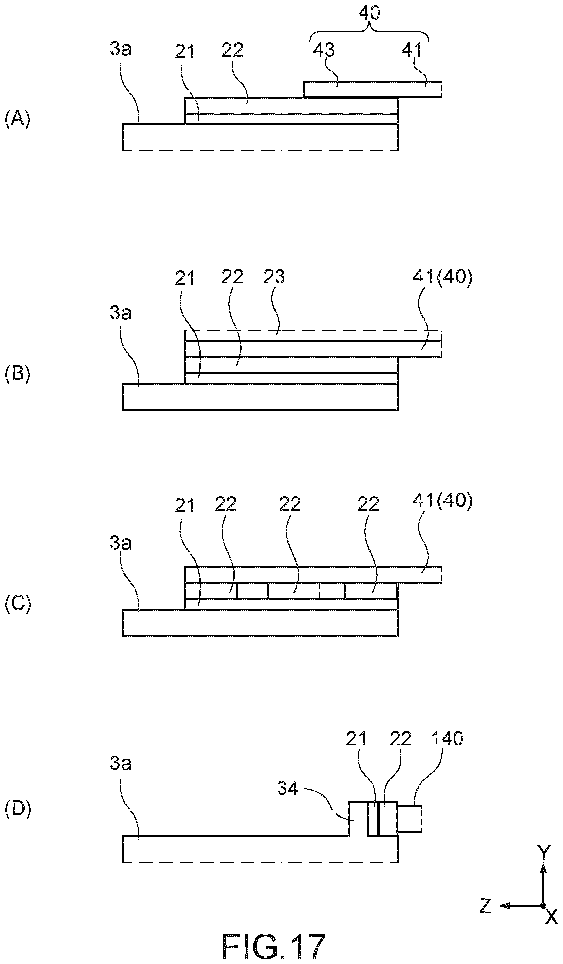

Further, in each embodiment described above, the base 43 of the holding member 40 is formed to have such a size that the whole surface region of the deformation layer 22 can be covered, but the present technology is not limited thereto. For example, as shown in (A) of Fig. 17, the base 43 may be formed to have such a size that only a part of the region of the deformation layer 22 is covered. The part of the region can be adjusted, for example, in accordance with a pressure detection region or the like on the pressure sensor 21 when a workpiece is held with a target holding force.

Further, as shown in (B) of Fig. 17, a pressure sensor 23 serving as a second pressure sensor may further be disposed on the base 43 of the holding member 40. The pressure sensor 23 is disposed on the holding member 40 and is constituted by a pressure distribution sensor that detects an in-plane pressure distribution perpendicular to the holding direction (the Y-axis direction), similarly to the pressure sensor 21. The pressure sensor 23 may be disposed to face the pressure sensor 21 via the deformation layer 22 and the base 43 of the holding member 40, or may be disposed on the claw portion 41 of the holding member 40. When the workpiece is held, changes in pressure detection axes (gravity positions of pressure distribution) of both the pressure sensors 21 and 23 are detected, so that shear stress acting on the deformation layer 22 can be detected.

Further, as shown in (C) of Fig. 17, the deformation layer 22 does not need to be formed over the whole region of the upper surface of the pressure sensor 21 and may be disposed on the pressure sensor 21 dispersedly in an island manner. In this case, since the elastic force of the deformation layer 22 can be discretionally adjusted for each region, for example, the detection sensitivity of a tip region on the fingertip side of the pressure sensor 21 can be enhanced more than that of other regions.

In addition, in the embodiments described above, the pressure sensor 21 is configured to be capable of detecting an in-plane pressure distribution perpendicular to the holding direction, but instead of this, for example, as shown in (D) of Fig. 17, the pressure sensor 21 may also be configured to be capable of detecting an in-plane pressure distribution parallel to the holding direction. In this case, a seat portion 34 that supports the first pressure sensor 21 in parallel to the XY-plane is provided to the finger portion 3a (3b). The configuration described in the second embodiment can be employed as the holding member 140. Such a configuration also makes it possible to highly accurately detect multiaxial stress acting on the tip of the hand portion.

In addition, in the embodiments described above, the case where the claw portion of the holding member protrudes downwardly relative to the fingertip portion has been described as an example, but the protruding direction of the claw portion is not limited thereto and may be a front direction (in Fig. 1, the X-axis direction), for example. In this case, for example, a robot hand capable of holding a workpiece placed on a working table at any height position can be configured.

Note that the present technology can also take the following configurations.
(1) A robot apparatus, including:
   a hand portion including a plurality of finger portions disposed to face each other in a direction of a first axis;
   a sensor portion including
      a first pressure sensor that is disposed on at least one of the plurality of finger portions and is capable of detecting a pressure distribution, and
      a deformation layer that is disposed on the first pressure sensor and is made of a viscoelastic material; and
   a holding member supported by the deformation layer and including a claw portion that protrudes from a tip of the at least one of the finger portions in a direction of a second axis intersecting with the first axis and is capable of holding a workpiece.
(2) The robot apparatus according to (1), in which
   the first pressure sensor detects an in-plane pressure distribution perpendicular to the direction of the first axis.
(3) The robot apparatus according to (2), in which
   the holding member further includes a base that is disposed to face the first pressure sensor in the direction of the first axis with the deformation layer being sandwiched therebetween.
(4) The robot apparatus according to (3), in which
   the sensor portion further includes a second pressure sensor that is disposed on the holding member and is capable of detecting an in-plane pressure distribution perpendicular to the direction of the first axis.
(5) The robot apparatus according to any one of (1) to (4), in which
   the claw portion is a plate member having a holding surface perpendicular to the direction of the first axis.
(6) The robot apparatus according to any one of (1) to (4), in which
   the claw portion is a single or a plurality of columnar bodies extending perpendicular to the direction of the first axis.
(7) The robot apparatus according to any one of (2) to (4), in which
   the finger portion has a first main surface and a second main surface each perpendicular to the direction of the first axis, and
   the first main surface is an inner side surface on the side on which the workpiece is held, and the second main surface is an outer side surface opposite to the first main surface.
(8) The robot apparatus according to (7), in which
   the first pressure sensor is disposed on the first main surface.
(9) The robot apparatus according to (7), in which
   the first pressure sensor is disposed on the second main surface.
(10) The robot apparatus according to (9), in which the holding member includes
   a coupling portion that couples the claw portion and the base to each other, and
   a shaft portion that is supported by the hand portion and rotatably supports the coupling portion about a third axis orthogonal to the first axis and the second axis.
(11) The robot apparatus according to (10), in which
   the claw portion includes a groove that extends along a direction of the third axis and is capable of housing the workpiece.
(12) The robot apparatus according to any one of (1) to (11), further including
   a control unit that generates a control command for controlling the hand portion on the basis of an output of the sensor portion.
(13) A sensor apparatus, including:
   a pressure sensor that is disposed on at least one of a plurality of finger portions capable of holding a workpiece in a direction of a first axis and is capable of detecting a pressure distribution;
   a deformation layer that is disposed on the pressure sensor and is made of a viscoelastic material; and
   a holding member supported by the deformation layer and including a claw portion that protrudes from a tip of the at least one of the finger portions in a direction of a second axis orthogonal to the first axis and holds the workpiece.

### Reference Signs List

3a, 3b finger portion
10 robot apparatus
11 controller
12 drive section
12a drive unit
20a, 20b sensor apparatus
21 pressure sensor (first pressure sensor)
21s sensing portion
22 deformation layer
23 pressure sensor (second pressure sensor)
40, 140, 240 holding member
41, 241 claw portion
42, 142, 242 holding surface
43, 243 base
70 control unit
211 sensor electrode layer
212 reference electrode layer
213 elastic layer
244 coupling portion
245 shaft portion
W, W1 workpiece

## Claims

1. A robot apparatus, comprising:
a hand portion including a plurality of finger portions disposed to face each other in a direction of a first axis;
a sensor portion including
a first pressure sensor that is disposed on at least one of the plurality of finger portions and is capable of detecting a pressure distribution, and
a deformation layer that is disposed on the first pressure sensor and is made of a viscoelastic material; and
a holding member supported by the deformation layer and including a claw portion that protrudes from a tip of the at least one of the finger portions in a direction of a second axis intersecting with the first axis and is capable of holding a workpiece.

2. The robot apparatus according to claim 1, wherein
the first pressure sensor detects an in-plane pressure distribution perpendicular to the direction of the first axis.

3. The robot apparatus according to claim 2, wherein
the holding member further includes a base that is disposed to face the first pressure sensor in the direction of the first axis with the deformation layer being sandwiched therebetween.

4. The robot apparatus according to claim 3, wherein
the sensor portion further includes a second pressure sensor that is disposed on the holding member and is capable of detecting an in-plane pressure distribution perpendicular to the direction of the first axis.

5. The robot apparatus according to claim 1, wherein
the claw portion is a plate member having a holding surface perpendicular to the direction of the first axis.

6. The robot apparatus according to claim 1, wherein
the claw portion is a single or a plurality of columnar bodies extending perpendicular to the direction of the first axis.

7. The robot apparatus according to claim 2, wherein
the finger portion has a first main surface and a second main surface each perpendicular to the direction of the first axis, and
the first main surface is an inner side surface on the side on which the workpiece is held, and the second main surface is an outer side surface opposite to the first main surface.

8. The robot apparatus according to claim 7, wherein
the first pressure sensor is disposed on the first main surface.

9. The robot apparatus according to claim 7, wherein
the first pressure sensor is disposed on the second main surface.

10. The robot apparatus according to claim 9, wherein the holding member includes
a coupling portion that couples the claw portion and the base to each other, and
a shaft portion that is supported by the hand portion and rotatably supports the coupling portion about a third axis orthogonal to the first axis and the second axis.

11. The robot apparatus according to claim 10, wherein
the claw portion includes a groove that extends along a direction of the third axis and is capable of housing the workpiece.

12. The robot apparatus according to claim 1, further comprising
a control unit that generates a control command for controlling the hand portion on a basis of an output of the sensor portion.

13. A sensor apparatus, comprising:
a pressure sensor that is disposed on at least one of a plurality of finger portions capable of holding a workpiece in a direction of a first axis and is capable of detecting a pressure distribution;
a deformation layer that is disposed on the pressure sensor and is made of a viscoelastic material; and
a holding member supported by the deformation layer and including a claw portion that protrudes from a tip of the at least one of the finger portions in a direction of a second axis orthogonal to the first axis and holds the workpiece.
